# EUROPÄISCHE PATENTSCHRIFT

(11) **EP 1 056 964 B1**
(45) Veröffentlichungstag und Bekanntmachung des Hinweises auf die Patenterteilung: **07.05.2003**
(21) Anmeldenummer: 99910280.9
(22) Anmeldetag: 25.02.1999
(51) Int. Cl.: F16H 7/08

(54) **SPANN- UND DÄMPFUNGSELEMENT**
TENSIONING AND ABSORBING ELEMENT
ELEMENT DE SERRAGE ET D'AMORTISSEMENT

(30) Priorität: 26.02.1998 DE 19808129
(43) Veröffentlichungstag der Anmeldung: 06.12.2000
(73) Patentinhaber: EBERT Kettenspanntechnik GmbH, 04509 Freiroda (DE)
(72) Erfinder: EBERT, Siegfried, D-04509 Freiroda (DE)
(74) Vertreter: Tetzner, Michael, Dipl.-Ing.
(86) Internationale Anmeldenummer: EP9901213
(87) Internationale Veröffentlichungsnummer: WO99043969

(56) Entgegenhaltungen:
- DE-C- 4 317 033
- US-A- 1 567 494
- "FLEXIBLE RING LOCKS TENSION IN CHAINS" MACHINE DESIGN, Bd. 69, Nr. 14, 24. Juli 1997, Seite 50 XP000765856

## Beschreibung

Die Erfindung betrifft ein Spann- und Dämpfungselement aus einem Elastomerwerkstoff für Kettentriebe gemäß dem Oberbegriff des Anspruches 1, insbesondere ein Spannund Dämpfungselement für den Sekundärkettentrieb eines Motorrades mit temporärer Änderung des Achsabstandes der Kettenräder.

Bei Motorrädern mit Sekundärkettentrieb und Hinterradschwinge besteht das Problem der temporären Änderung des Achsabstandes der Kettenräder während der Schwingbewegung aus der für den Kettendurchhang als Einstellage genutzten Mittellage der Schwinge und den Achsabständen der Kettenräder in den Phasen der oberen, eingefederten und der unteren, ausgefederten Endlage der Schwinge. Beim Ein- und Ausfedern der Schwinge verkleinert sich deshalb stets auch der Achsabstand der Kettenräder mit der Wirkung, daß der Kettendurchhang im Leertrum größer wird. Ursächlich hierfür ist die konstruktiv bedingte Position des Kettenrades am Getriebeausgang, welche nicht mit dem Drehpunkt der Hinterradschwinge zusammenfällt, sondern in Fahrtrichtung vor dem Drehpunkt liegt.

Die temporäre Änderung des Achsabstandes ist zugleich mit einer Zwangsdrehung des Hinterrades verbunden, weil das Hinterrad auf der Fahrbahn abrollt, wenn sich der Abstand seines Radmittelpunktes vom Kettenrad am Getriebeausgang verschiebt. Die gleiche Drehbewegung wie das Hinterrad vollzieht damit das Kettenrad am Hinterrad und im entsprechenden Übersetzungsverhältnis auch das Kettenrad am Getriebeausgang. Die temporäre Änderung des Achsabstandes und die Zwangsdrehung des Hinterrades durch die Abrollbewegung beim Ein- und Ausfedern potenzieren sich und verschlechtern die Fahrstabilität des Motorrades.

Bei großem Kettendurchhang im Leertrum kommt es außerdem zu Schwingungen und Stößen im Leertrum, die die Fahreigenschaften des Motorrades negativ beeinflussen. Zur Vermeidung dieses Nachteils wird daher üblicherweise ein gegen das Leertrum gerichteter, federbelasteter Kettenspanner vorgesehen.

In den Wechselphasen vom Beschleunigen zum Bremsen oder während des Schaltens kommt es ferner zu Phasen, in denen auch das Lasttrum nicht belastet ist. Man spricht in diesem Zusammenhang auch von "Doppel-Leertrum-Phasen", in denen auch das Lasttrum kurzzeitig leerläuft. Diese Phasen sind besonders gefährlich, weil sie das Aufsteigen der umlaufend nur mit Fliehkräften belasteten, zeitweilig überlangen Kette auf das getriebeseitige Kettenrad hervorrufen können, wodurch es zu einer indifferenten Änderung der Übersetzung des Sekundärkettentriebes und/oder zum Überspringen der Kette kommen kann.

Die Änderung des Achsabstandes, die Zwangsdrehung des Hinterrades und die Doppel-Leertrum-Phasen führen zu indifferenten Phasen der durch Federung, Dämpfung und Reifenfederung beeinflußten Vertikaldynamik des Fahrzeuges sowie zu indifferenten Phasen der Längsdynamik (Schwerpunktverlagerung und Nickbewegung) des Motorrades. Bei Kurvendurchfahrten mit Lastwechsel durch Bremsen oder Beschleunigen und einem großen Kettendurchhang im Leertrum in der unteren, ausgefederten Endlage der Schwinge reduziert sich u.U. die Reifenaufstandsfläche so stark, daß das Motorrad nicht mehr beherrschbar ist und ein Sturz nicht vermieden werden kann.

Aus der DD 275 166 A3 ist ein Spann- und Dämpfungselement für Kettentriebe bekannt. Dabei handelt es sich um ein zwischen der Form eines konzentrischen Ringes und der Form einer Cassinischen Kurve mit ellipsenähnlicher Gestalt elastisch verformbaren, zur Kette formpaarigen, achslosen Ring aus elastischem Werkstoff. Dieses Spannund Dämpfungselement wird zwischen Trummen des Kettentriebes angeordnet, greift mit seinem Zahnkranz in diese ein, sichert dabei selbsttätig seine Lage im Kettentrieb und spannt diametral.

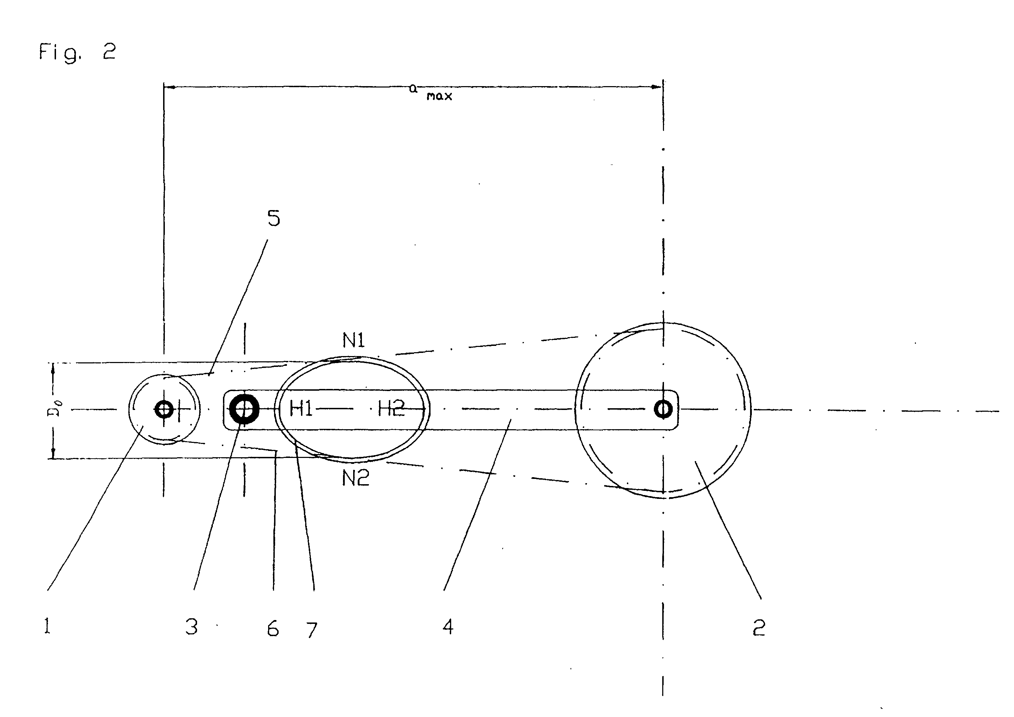

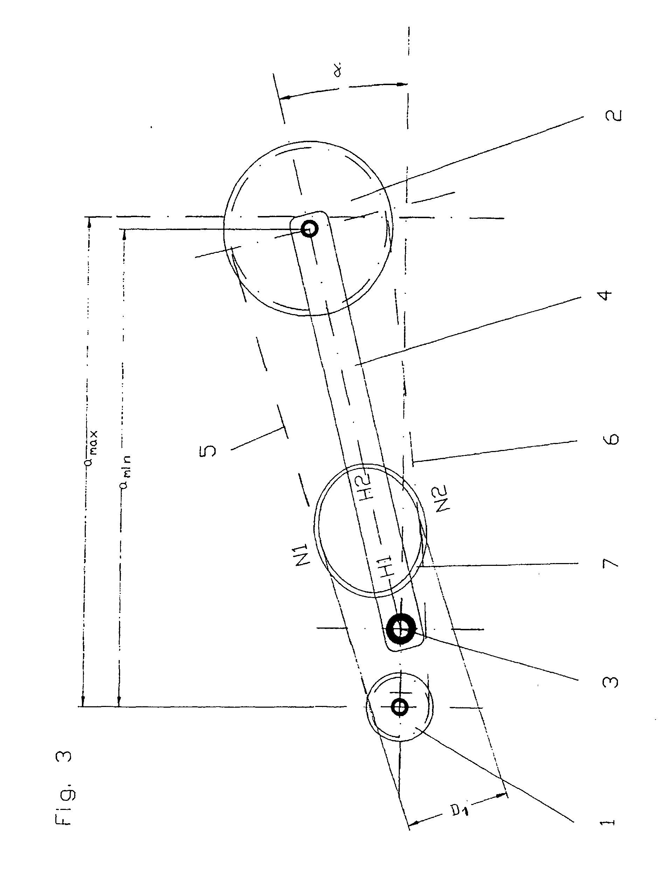

Ferner ist aus der DE 43 17 033 C1 ein Spann- und Dämpfungselement gemäß dem Oberbegriff des Anspruches 1 bekannt, das im folgenden anhand der Fig.2 und 3 beispielhaft anhand eines Sekundärkettentriebes eines Motorrades mit temporärer Änderung des Achsabstandes der Kettenräder näher veranschaulicht wird.

Der in den Fig.2 und 3 dargestellte Kettentrieb weist ein getriebeseitiges Kettenrad 1, ein Hinterradkettenrad 2 und eine aus Lasttrum 5 und Leertrum 6 bestehende, umlaufende Kette auf. Zwischen dem Leertrum und dem Laststrum ist ein Spann- und Dämpfungselement 7 angeordnet, das in diesem gespannten, eingebauten Zustand eine ellipsenähnliche Form annimmt. Dieses Spannund Dämpfungselement weist einen elastisch verformbaren Ringteil und einen an seinem Umfang angeordneten Zahnkranz auf, wobei der Ringteil - im spannungsfreien, nicht eingebauten Zustand - kreisförmig ausgebildet ist. Im eingebauten Zustand kommt der Zahnkranz mit dem Leertrum und dem Lasttrum in Eingriff, wodurch eine durch die ellipsenähnliche Verformung des Ringteils hervorgerufene Spannkraft auf die beiden Trume übertragen wird.

Das Hinterradkettenrad 2 ist an einem Ende einer Hinterradschwinge 4 befestigt, die am anderen Ende um einen Schwingendrehpunkt 3 aus der in Fig.2 dargestellten Mittellage in eine eingefederte und eine ausgefederte Endlage der Schwingung verschwenkbar ist. In Fig.3 ist die eingefederte Endlage der Schwinge dargestellt.

Dadurch, daß der Schwingendrehpunkt 3 und der Drehpunkt des getriebeseitigen Kettenrades 1 nicht zusammenfallen, kommt es bei einer Bewegung der Hinterradschwinge 4 zu einer temporären Änderung des Achsabstandes der beiden Kettenräder 1, 2. In der in Fig.2 dargestellten Mittellage ergibt sich ein maximaler Achsabstand aₘₐₓ und in den beiden Endlagen, siehe Fig.3, ein minimaler Abstand aₘᵢₙ. Durch eine Verringerung des Achsabstandes vergrößert sich der Kettendurchhang im Leertrum 6.

Das vorgespannte, eingebaute Spann- und Dämpfungselement strebt immer seinen spannungsfreien Zustand an, in dem es eine kreisförmige Form aufweist. Das Spann- und Dämpfungselement ist in seiner Größe so ausgebildet, daß es im eingebauten Zustand zu keiner Zeit seinen spannungsfreien Zustand einnimmt. Auf diese Weise ist gewährleistet, daß auch in der in Fig.3 gezeigten eingefederten Endlage, bei der es zu einem größeren Kettendurchhang kommt, immer noch eine Spannkraft vom Spann- und Dämpfungselement auf die beiden Trumme übertragen wird. Das Spann- und Dämpfungselement verändert daher in Abhängigkeit des Achsabstandes zwischen den beiden Kettenrädern 1, 2 seine Form, wie dies insbesondere aus den Fig.2 und 3 zu ersehen ist. In dem Zustand gemäß Fig.2 ist der Abstand der Nebenscheitelpunkte N1, N2 des ellipsenähnlich verformten Spann- und Dämpfungselementes kleiner als im Zustand gemäß Fig.3. Neben dem Ausgleich des Kettendurchhanges dämpft das Spann- und Dämpfungselement auch Kettenschläge, die beispielsweise durch Polygon- und Überholstöße, Schwerkraft- und/oder Fliehkrafteinwirkung entstehen können.

Die Spannkraft und die Dämpfung nehmen mit zunehmender ellipsenähnlicher Deformation des Spann- und Dämpfungselementes durch dynamisch elastische und plastische Verformungsparameter zu. Die Spannkraft erhöht sich dabei zudem durch statische Verformungsparameter.

Dies bedeutet jedoch, daß während des Fahrbetriebes das Spann- und Dämpfungselement 7 in den Phasen, in denen sich die Hinterradschwinge 4 in der in Fig.2 gezeigten Mittellage befindet und der Kettendurchhang dadurch kleiner ist, stärker dynamisch belastet wird als in der in Fig.3 gezeigten eingefederten Endlage der Hinterradschwinge.

Während des Betriebes des Kettentriebes rotiert das Spann- und Dämpfungselement durch seinen Eingriff in das Last- und Leertrum mit. Dabei kommt es ständig zu einer elastischen und plastischen Verformung im Ringteil, wobei insbesondere die radial außen- und innenliegenden Bereiche des Ringteils besonders belastet sind. Die Verformung und Rückstellung der Deformation äußert sich letztlich in der Verlustwärme des Spann- und Dämpfungselementes. Da die Verlustwärme werkstoffbedingt einen bestimmten Wert nicht überschreiten darf, um ausreichende Spannkraft und Dämpfung zu erreichen, ist die maximal zulässige Rotationsgeschwindigkeit des Spann- und Dämpfungselementes vorgegeben.

Ferner führen große Rückstellwege und Rückstellgeschwindigkeiten der elastischen und der plastischen Verformanteile zu einer schnelleren Ermüdung des Werkstoffes.

Der Nachteil des bekannten Spann- und Dämpfungselementes für die Anwendung in Sekundärkettentrieben an Motorrädern mit Hinterradschwinge besteht somit darin, daß es in der am häufigsten vorkommenden Mittellagenphase der Schwinge, mit dem dann entsprechend kleineren Kettendurchhang, im Bereich seiner stärksten ellipsenähnlichen Verformung betrieben wird und es durch die Rotation dadurch zu größerer Verlustwärme und Werkstoffermüdung kommt.

Hierdurch wird zudem die maximal zulässige Kettengeschwindigkeit des Sekundärkettentriebes und die maximal zulässige Fahrgeschwindigkeit des Motorrades begrenzt.

Der Erfindung liegt daher die Aufgabe zugrunde, das Spann- und Dämpfungselement gemäß dem Oberbegriff des Anspruches 1 dahingehend weiterzuentwickeln, daß es im Betrieb eine geringere Verlustwärme produziert und einer langsameren Materialermüdung unterliegt.

Erfindungsgemäß wird diese Aufgabe durch die kennzeichnenden Merkmale des Anspruches 1 gelöst.

Weitere Ausgestaltungen der Erfindung sind Gegenstand der Unteransprüche.

Gemäß der Erfindung weist der Ringteil eine Querschnitt auf, der mit zunehmender Biegung deformationsbedingt einen abnehmenden Biegewiderstand aufweist, und im betriebsbedingten maximal deformierten Zustand das Verhältnis Höhe zur Breite des Querschnitts um wenigstens 4 % kleiner ist als im spannungsfreien Zustand.

Das Verhältnis von Höhe zu Breite wirkt sich unmittelbar auf den Biegewiderstand aus, der einer zunehmenden Verformung des Ringteils entgegensteht. So verringert sich bei einem kleineren Verhältnis von Höhe zu Breite auch der Biegewiderstand.

Dieser Effekt ist besonders vorteilhaft bei einem Spann- und Dämpfungselement für einen Sekundärkettentrieb eines Motorrades mit temporärer Änderung des Achsabstandes der Kettenräder. Denn gerade in der Mittellagenphase der Hinterradschwinge, in der das Leertrum ohnehin seinen kleinsten Durchhang hat, also Schläge und Stöße ebenfalls minimal sind, und in der das Spann- und Dämpfungselement seine größte elliptische Verformung aufweist, führt die Veränderung des Querschnittsprofils zu einem weniger biegesteifen Querschnitt, so daß letztendlich eine geringere Verlustwärme erzeugt und die Materialermüdung minimiert wird.

Bei dem bekannten Ringteil, bei dem sich der Querschnitt bei Deformation im wesentlichen nicht ändert, kommt es bei der Rotation des Ringteils zu wechselnden, einachsigen Biegebeanspruchungen mit Spannungskonzentrationen in den ringinnenseitigen und ringaußenseitigen Randfasern beim Durchlaufen der Haupt- und Nebenscheitelbereiche des ellipsenähnlich verformten Ringteils.

Bei dem erfindungsgemäßen Ringteil kommt es dagegen bei der Biegebeanspruchung zu einer mehrachsigen Spannungsverteilung mit selbsttätiger Deformation des biegebeanspruchten Querschnittsprofils zum weniger biegesteifen Querschnittsprofil. Es besteht hier die Besonderheit, daß das biegebelastete Querschnittsprofil durch Formänderung in mehrere Achsrichtungen, speziell jedoch in eine Form mit kleinerem Biegewiderstand ausweicht, indem die stärker belasteten Randfasern durch Verringerung der Höhe sich näher zur neutralen Biegefaser orientieren. Die durch das Rollen des Spann- und Dämpfungselementes verursachten Spannungen, die beim Durchlaufen der Haupt- und Nebenscheitelbereiche (H1, H2, N1, N2) des Spann- und Dämpfungselementes in der Querschnittsebene des Ringprofils ausftreten, sind mit der Querdehnung des biegebeanspruchten Querschnittes gekoppelt. Dies bewirkt eine Art Entfaltungsbewegung bzw. eine Verbreiterung in der x-Achse und eine Einschnürung in der y-Achse des Querschnittsprofils. Dieses nach dieser Entfaltungsbewegung bzw. Verbreiterung und Einschnürung vorliegende Querschnittsprofil hat einen kleineren Biegewiderstand als vorher. Die Deformation des Querschnittsprofils vergrößert sich stetig mit der Deformation des Spann- und Dämpfungselementes von seiner kreisringförmigen Form zur ellipsenähnlichen Form. Das Spann- und Dämpfungselement geht somit mit zunehmender Deformation selbstregelnd in einen Zustand über, bei dem der Biegewiderstand bzw. die Spannkraft reduziert ist.

Damit hat das Spann- und Dämpfungselement den Vorteil, daß es trotz stärkerer Deformation in bestimmten Phasen des Kettentriebes, insbesondere bei Beschleunigungs-, Brems- und Fahrphasen eines Motorrades im höheren Geschwindigkeitsbereich in Verbindung mit der dabei vorliegenden Mittellagenphase der Hinterradsschwinge, einer geringeren statischen, dynamischen und thermischen Belastung ausgesetzt ist, so daß die maximal zulässige Kettengeschwindigkeit erhöht werden kann.

Umgekehrt hat das Spann- und Dämpfungselement den Vorteil, daß es bei geringerer Deformation und einem starken Kettendurchhang die Kette immer noch ausreichend straff spannt. Eine derartige Situation tritt bei Motorrädern mit Hinterradschwinge insbesondere in der Doppel-Leertrum-Phase des Kettentriebes auf, die beispielsweise beim Herunterschalten des Getriebes mit gleichzeitigem Bremsen, Zwischengasgeben oder Einkuppeln nach dem Schalten in Verbindung mit Ein- und Ausfedern der Hinterradschwinge entstehen kann. Weitere Ausgestaltungen des Spann- und Dämpfungselementes werden anhand der nachfolgenden Beschreibung einiger Ausführungsbeispiele und der Zeichnung näher erläutert.

In der Zeichnung zeigen
- Fig.1: eine Seitenansicht des Spann- und Dämpfungselements,
- Fig.2: eine schematische Seitenansicht des Kettentriebes mit Spann- und Dämpfungselement in der Mittellagenphase,
- Fig.3: eine schematische Seitenansicht des Kettentriebes mit Spann- und Dämpfungselement in der eingefederten Endlagenphase,
- Fig.4a: eine Schnittdarstellung des Spann- und Dämpfungselementes gemäß einem ersten Ausführungsbeispiel im spannungsfreien Zustand,
- Fig.4b: eine Schnittdarstellung des Spann- und Dämpfungselementes gemäß dem ersten Ausführungsbeispiel im gespannten Zustand,
- Fig.5a: eine Schnittdarstellung des Spann- und Dämpfungselementes gemäß dem zweiten Ausführungsbeispiel im spannungsfreien Zustand,
- Fig.5b: eine Schnittdarstellung des Spann- und Dämpfungselementes gemäß einem zweiten Ausführungsbeispiel im gespannten Zustand,
- Fig.6a: eine Schnittdarstellung des Spann- und Dämpfungselementes gemäß einem dritten Ausführungsbeispiel im spannungsfreien Zustand und
- Fig.6b: eine Schnittdarstellung des Spann- und Dämpfungselementes gemäß dem dritten Ausführungsbeispiel im gespannten Zustand.

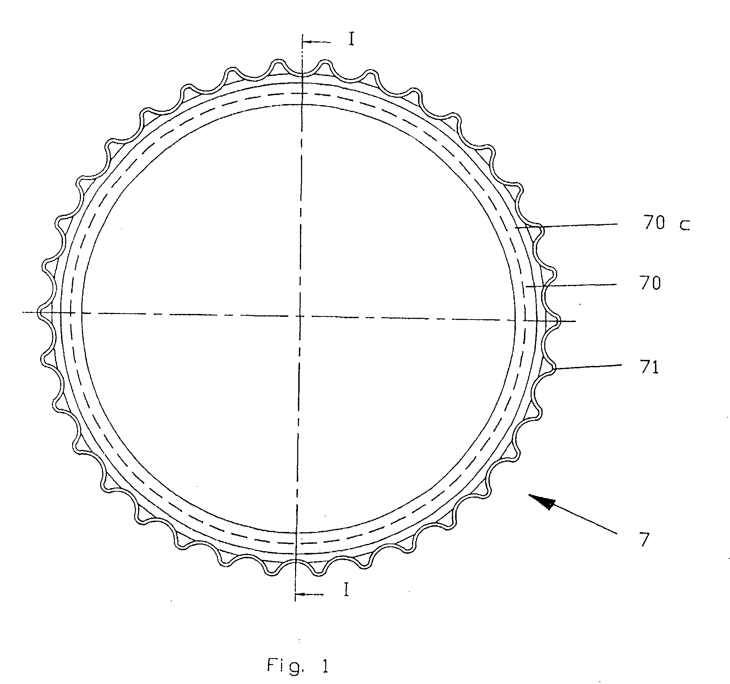

Fig.1 zeigt ein Spann- und Dämpfungselement 7 im spannungsfreien, nicht eingebauten Zustand. Es ist kreisförmig ausgebildet und weist einen elastisch verformbaren Ringteil 70 und einen an seinem Umfang angeordneten Zahnkranz 71 auf, wobei Ringteil und Zahnkranz vorzugsweise einstückig hergestellt sind.

Fig.2 und 3 zeigen das Spann- und Dämpfungselement 7 in zwei verschiedenen Phasen des Kettentriebes, die weiter oben bereits näher erläutert worden sind. Das Spannund Dämpfungselement 7 hat dabei die Form einer Cassinischen Kurve mit ellipsenähnlicher Form im Achsenverhältnis H1, H2 : N1, N2 (Abstände der Hauptscheitel bzw. Nebenscheitel). Im dargestellten Ausführungsbeispiel beträgt das Verhältnis beispielsweise 1,0 : 0,7. Das Spann- und Dämpfungselement spannt dabei den Lasttrum 5 und den Leertrum 6 diametral. Es ist dabei ersichtlich, daß das Spann- und Dämpfungselement in den beiden Ketteneingriffsbereichen nahe den Nebenscheitelpunkten N1 und N2 gegenüber der ursprünglich kreisförmigen Form weniger und in den Hauptscheitelbereichen in der Nähe der Punkte H1 und H2 stärker gekrümmt ist.

In Fig.3 ist die Hinterradschwinge 4 um einen Winkel a von beispielsweise 14° aus der Mittellage ausgelenkt. Diese Auslenkung verursacht eine Verkleinerung des Abstandes der Mittelachsen vom getriebeseitigen Kettenrad und Hinterradkettenrad 2 auf das Maß aₘᵢₙ. Die Differenz zwischen aₘₐₓ und aₘᵢₙ ergibt die temporäre Änderung des Achsabstandes der Kettenräder. Ohne Spann- und Dämpfungselement käme es in diesem Zustand zu einem großen Kettendurchhang, der zu den weiter oben beschriebenen Nachteilen führen würde.

Durch das zwischen Leertrum und Lasttrum angeordnete Spann- und Dämpfungselement 7 wird die Kette in diesem Bereich auf das Diametralmaß D₁ ausgelenkt, welches dem Kettendurchhang entspricht. Das Diametralmaß D₁ ist gegenüber dem Diametralmaß D₀ in der in Fig.2 gezeigten Lage größer. Die Spannkraft des Spann- und Dämpfungselements spannt den Last- und Leertrum diametral. Das Achsenverhältnis H1, H2 : N1, N2 hat sich in Fig.3 auf 1,00 : 0,85 verändert.

Es ist ersichtlich, daß das Spann- und Dämpfungselement 7 in den beiden Ketteneingriffsbereichen nahe den Scheitelpunkten N1 und N2 gegenüber der ursprünglich kreisförmigen Form weniger und in den Hauptscheitelbereichen nahe den Punkten H1 und H2 stärker gekrümmt ist.

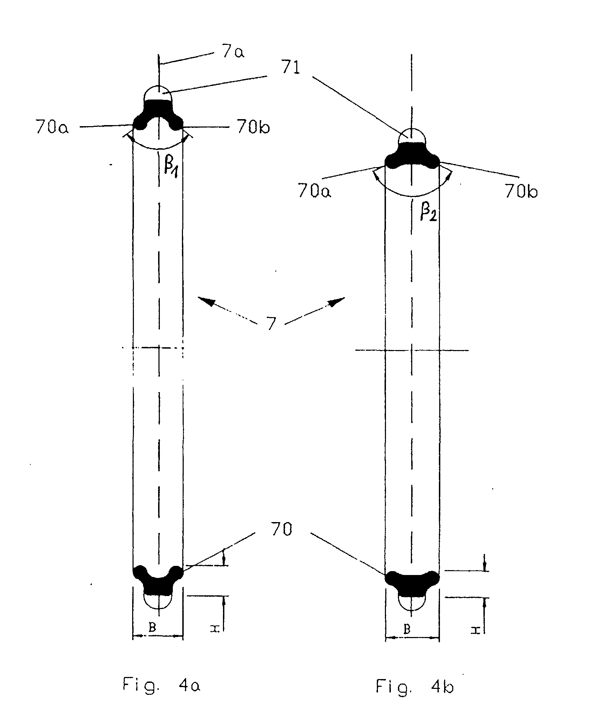

Fig.4a zeigt einen Querschnitt des Spann- und Dämpfungselementes 7 längs der Linie I-I der Fig.1.

Das Spann- und Dämpfungselement 7 hat ein Y-förmiges Querschnittsprofil, wobei der Ringteil 70 auf seiner radial innenliegenden Seite zwei Schenkel 70a, 70b aufweist, die symmetrisch zur Längsmittelebene 7a ausgerichtet sind und zueinander einen Winkel β₁ einschließen, der im spannungsfreien Zustand des Spann- und Dämpfungselementes 7 zwischen 90° und 180° beträgt. Im dargestellten Ausführungsbeispiel ist ein Winkel von 103° vorgesehen.

Das Spann- und Dämpfungselement 7 wird aus einem homogenen oder annähernd homogenen Elastomerwerkstoff hergestellt.

Im eingebauten Zustand des Spann- und Dämpfungselementes 7 weist dieses eine in den Fig.2 und 3 gezeigte ellipsenähnliche Form auf, wobei es mit zunehmender Verformung des Ringteils zu einer stetigen Änderung seines Querschnittsprofils kommt. In Fig.4b ist das Spann- und Dämpfungselement 7 beispielhaft in dem in Fig.2 dargestellten maximal gespannten Zustand gezeigt.

Das Querschnittsprofil des Ringteils 70 gemäß Fig.4a weist eine Höhe H₀ und eine Breite B₀ auf. Demgegenüber hat sich das Querschnittsprofil gemäß Fig.4b durch die Verformung des Spann- und Dämpfungselementes 7 in seinem Querschnittsprofil derart verändert, daß das Verhältnis der neuen Höhe H₁ zur neuen Breite B₁ um wenigstens 4 % kleiner als das Verhältnis H₀ zu B₀ im spannungsfreien Zustand gemäß Fig.4a ist. Vorteilhafterweise beträgt die Verkleinerung des Verhältnisses von Höhe zu Breite mehr als 10 %.

Der Winkel β₂ zwischen den beiden Schenkeln 70a, 70b hat sich im vorgespannten Zustand gemäß Fig.4b vergrößert und beträgt im dargestellten Auführungsbeispiel 128°.

Der Ringteil 70 weist zwischen seinen radial außenliegenden und radial innenliegenden Randfasern eine neutrale Faser 70c auf, die beim Biegevorgang weder gedehnt noch gestaucht wird. Die Stauchung bzw. Dehnung der außen- bzw. innenliegenden Randfasern ist um so größer, je weiter diese Fasern von der neutralen Faser weg liegen. Durch eine Reduzierung der Höhe des Querschnittsprofiles rücken somit auch die außen- und innenliegenden Randfasern näher zur neutralen Faser 70 hin. Genau dies wird bei dem in den Fig.4a und 4b dargestellten ersten Ausführungsbeispiel dadurch erreicht, daß sich bei zunehmender Deformation des Spann- und Dämpfungselementes 7 die beiden Schenkel 70a, 70b des Ringteils 70 nach außen entfalten und sich dadurch die Höhe des Querschnittsprofils reduziert. Das Spann- und Dämpfungselement 7 nimmt daher bei zunehmender Verformung ein Querschnittsprofil an, das einen verringerten Biegewiderstand aufweist.

Das Material des Ringteils 70 wird durch die Rotation des Spann- und Dehnungselementes im Wechsel gedehnt und gestaucht, wobei dieser Wechsel jeweils nach einem Rotationswinkel von 90° stattfindet.

Der sich durch die Änderung des Querschnittsprofils ergebende geringere Biegewiderstand verringert jedoch die durch Dehnung und Stauchung des Materials bedingte Verlustwärme und minimiert dadurch die Materialermüdung.

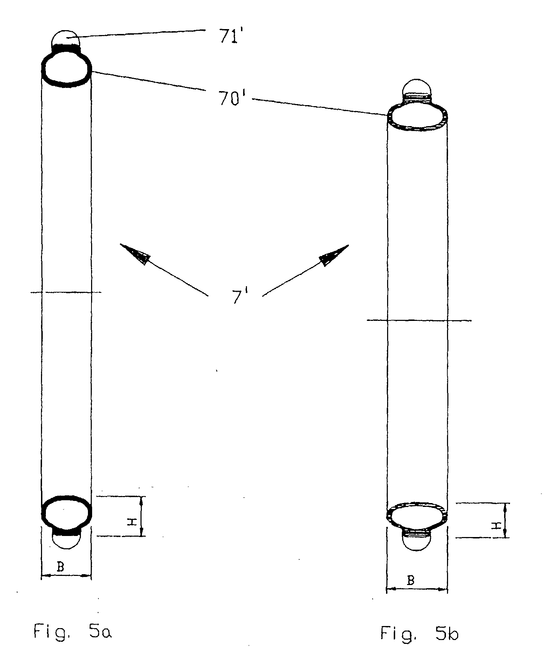

In den Fig.5a und 5b ist ein Spann- und Dämpfungselement 7' gemäß einem zweiten Ausführungsbeispiel dargestellt. Die Seitenansicht des Dämpfungselementes ist im wesentlichen mit der Ansicht gemäß Fig.1 vergleichbar. Der Unterschied besteht jedoch in der Ausgestaltung des Ringteils 70', der bei diesem Ausführungsbeispiel als Hohlkörper ausgebildet ist. Dieser Hohlkörper 70' ist im spannungsfreien Zustand gemäß Fig.5a rund und im Bereich des Zahnkranzes 71' abgeflacht ausgebildet. Das Verhältnis von Höhe zu Breite im spannungsfreien Zustand beträgt wiederum H₀/B₀.

Bei einer Deformation des Spann- und Dämpfungselementes 7' verändert sich das Querschnittsprofil des Hohlkörpers 70' in der in Fig.5b dargestellten Art und Weise. Das in Fig.5a noch kreisrunde Querschnittsprofil des Ringteils 70' bekommt in Fig.5b eine elliptische Form, so daß das Spann- und Dämpfungselement 7' im eingebauten Zustand sowohl in der Seitenansicht gemäß Fig.2 und 3 als auch in seinem Querschnittsprofil eine elliptische Form aufweist. Durch diese Querschnittsprofiländerung ergibt sich wiederum ein Verhältnis von Höhe H₁ zu Breite B₁ im maximal vorgespannten Zustand, das wenigstens um 4 %, vorzugsweise um 10 %, kleiner ist als das Verhältnis von Höhe H₀ zu Breite B₀ im spannungsfreien Zustand.

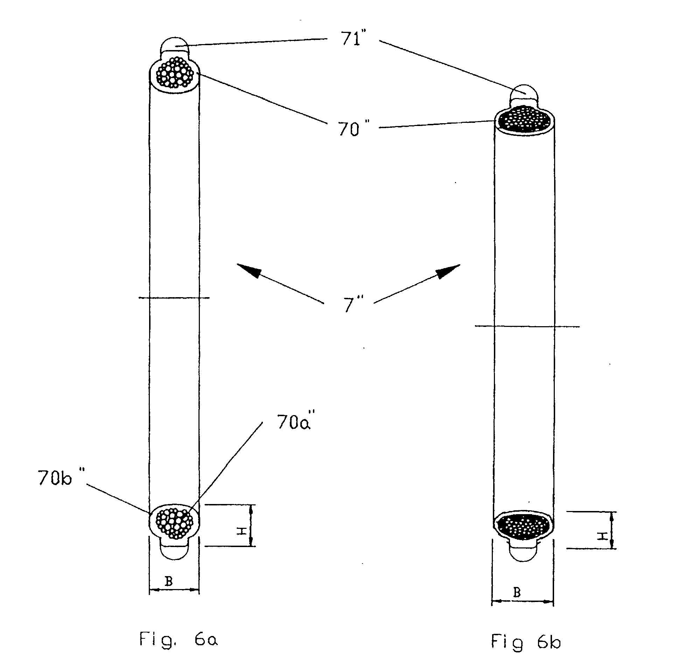

In den Fig.6a und 6b ist ein Spann- und Dämpfungselement 7'' gemäß einem dritten Ausführungsbeispiel dargestellt, das im Ringteil 70'' eine Kernbereich 70''a und einen Randbereich 70''b aus unterschiedlich elastischem Material aufweist, wobei das im Randbereich 70''b verwendete Material einen größeren Elastizitätsmodul aufweist als das im Kernbereich 70''a verwendete Material.

Durch diese Konstruktion kommt es bei einer Verformung des Spann- und Dämpfungselementes 7'' im gespannten Zustand ebenfalls zu einer Querschnittsprofiländerung, so daß das Verhältnis der Höhe des Querschnittsprofils zur Breite des Querschnittsprofils im maximal vorgespannten Zustand des Ringteils um wenigstens 4 %, vorzugsweise 10 %, kleiner ist als im spannungsfreien Zustand des Ringteils.

Um den gewünschten Effekt der Verkleinerung des Verhältnisses der Höhe zur Breite zu erreichen, muß der Ringteil 70'' gemäß dem dritten Ausführungsbeispiel als inhomogener Körper aufgebaut werden, bei dem zumindest für den Kernbereich und die Randbereiche Materialien mit unterschiedlichem Elastizitätsmodul verwendet werden.

Im Gegensatz zu dem aus der DE 43 17 033 C1 bekannten Spann- und Dämpfungselement haben Spann- und Dämpfungselemente gemäß den dargestellten Ausführungsbeispielen im gespannten Zustand stets einen kleineren Biegewiderstand als im spannungsfreien Zustand. Da der Biegewiderstand die Spannkraft bestimmt, mit der das Spann- und Dämpfungselement diametral spannt, ist im Gegensatz zum Stand der Technik die Spannkraft des erfindungsgemäßen Spann- und Dämpfungselements um so kleiner, je größer die Verformung ist und um so größer, je kleiner die Verformung ist.

In der Mittellage der Hinterradschwinge mit dem maximalen Abstand der Mittelachsen der Kettenräder ist damit das Spann- und Dämpfungselement stark verformt und entwickelt dabei eine konstruktiv ausreichend vorgegebene Spannkraft und Dämpfung.

In der Endlage der Hinterradschwinge mit dem minimalen Abstand der Mittelachsen der Kettenräder und dem größeren potentiellen Kettendurchhang ist dagegen das Spann- und Dämpfungselement geringer verformt. Es hat aber wegen der größeren Biegesteifigkeit der Querschnittsform die gleiche oder eine größere Spannkraft und Dämpfung. Bezogen auf den eingefederten Spannweg weist das Spann- und Dämpfungselement damit eine lineare oder degressive Spannkraft-Dämpfungscharakteristik auf. Bei Verwendung des Spann- und Dämpfungselementes im Sekundärkettentrieb eines Motorrades spannt es den Kettendurchhang, der sich aus der temporären Änderung des Achsabstandes der Kettenräder und aus der Zwangsdrehung des Hinterrades beim Ein- und Ausfedern ergibt, sowie Doppel-Leertrumphasen aus und dämpft den Kettentrieb vor indifferenten Übersetzungen sowie gegen Schwingungen und Stöße.

## Patentansprüche

1. Spann- und Dämpfungselement (7, 7', 7'') aus einem Elastomerwerkstoff für Kettentriebe, das einen elastisch verformbaren Ringteil (70, 70', 70'') und einen an seinem Umfang angeordneten Zahnkranz (71, 71', 71'') aufweist, wobei der Ringteil - im spannungsfreien, nicht eingebauten Zustand - kreisförmig ausgebildet ist und - im gespannten, eingebauten Zustand - zwischen einem Leertrum (6) und einem Lasttrum (5) des Kettentriebes eine ellipsenähnliche Form einnimmt, wobei der Zahnkranz mit dem Leertrum und dem Lasttrum in Eingriff kommt und dabei eine durch die ellipsenähnliche Verformung des Ringteils hervorgerufene Spannkraft auf die beiden Trume überträgt,
**dadurch gekennzeichnet, daß** der Ringteil einen Querschnitt aufweist, der mit zunehmender Biegung deformationsbedingt einen abnehmenden Biegewiderstand aufweist und im betriebsbedingten maximal deformierten Zustand das Verhältnis Höhe zur Breite des Querschnitts um wenigstens 4 % kleiner ist als im spannungsfreien Zustand.

2. Spann- und Dämpfungselement nach Anspruch 1, **dadurch gekennzeichnet, daß** sich das Verhältnis der Höhe zur Breite des Querschnittsprofils um wenigstens 10 % verkleinert.

3. Spann- und Dämpfungselement nach Anspruch 1, **dadurch gekennzeichnet, daß** der Ringteil (70') als Hohlkörper ausgebildet ist.

4. Spann- und Dämpfungselement nach Anspruch 3, **dadurch gekennzeichnet, daß** der Hohlkörper im spannungsfreien Zustand im Querschnitt rund ausgebildet und im Bereich des Zahnkranzes (71') abgeflacht ist.

5. Spann- und Dämpfungselement nach Anspruch 1, **dadurch gekennzeichnet, daß** der Ringteil auf seiner radial innenliegenden Seite wenigstens zwei Schenkel (70a, 70b) aufweist, die symmetrisch zur Längsmittelebene (7a) ausgerichtet sind und zueinander einen Winkel (β₁) einschließen, wobei sich der Winkel mit zunehmender Verformung des Ringteils vergrößert.

6. Spann- und Dämpfungselement nach Anspruch 5, **dadurch gekennzeichnet, daß** der Winkel im spannungsfreien Zustand des Ringteils zwischen 90° und 130° beträgt.

7. Spann- und Dämpfungselement nach Anspruch 1, **dadurch gekennzeichnet, daß** im Ringteil (70'') ein Kernbereich (70''a) und ein Randbereich (70''b) aus unterschiedlich elastischem Material vorgesehen ist, wobei das im Randbereich verwendete Material einen größeren Elastizitätsmodul aufweist als das im Kernbereich verwendete Material.

8. Spann- und Dämpfungselement nach einem der vorhergehenden Ansprüche, **dadurch gekennzeichnet, daß** der Kettentrieb als Sekundärkettentrieb eines Motorrades mit temporärer Änderung des Achsabstandes der Kettenräder ausgebildet ist.

## Claims

1. A tensioning and damping element (7, 7', 7'') consisting of an elastomeric material for chain drives, which comprises an elastically deformable ring part (70, 70', 70'') and a toothed rim (71, 71', 71'') arranged at the periphery thereof, the ring part being circular in the stress-free, uninstalled state and assuming, in the stressed, installed state, an ellipse-like shape between a non-loaded strand (6) and a loaded strand (5) of the chain drive, the toothed rim engaging with the non-loaded strand and the loaded strand and in so doing transmitting to the two strands a tensioning force which is caused by the ellipse-like deformation of the ring part,
**characterised in that** the ring part has a cross-section that, with increasing flexion, exhibits a decreasing flexural resistance owing to its deformation, and, in the maximally deformed state caused by operation, the height to width ratio of the cross-section is at least 4 % smaller than in the stress-free state.

2. A tensioning and damping element according to claim 1, **characterised in that** the height to width ratio of the cross-sectional profile is reduced by at least 10 %.

3. A tensioning and damping element according to claim 1, **characterised in that** the ring part (70') is in the form of a hollow body.

4. A tensioning and damping element according to claim 3, **characterised in that**, in the stress-free state, the hollow body is round in cross-section and flattened in the region of the toothed rim (71').

5. A tensioning and damping element according to claim 1, **characterised in that** the ring part has, on its radially inward side, at least two arms (70a, 70b) which are oriented symmetrically with respect to the longitudinal middle plane 7a and which together include an angle (β₁), the angle becoming larger with increasing deformation of the ring part.

6. A tensioning and damping element according to claim 5, **characterised in that** the angle in the stress-free state of the ring part is from 90° to 130°.

7. A tensioning and damping element according to claim 1, **characterised in that** a core region (70''a) and an edge region (70''b) consisting of materials having differing elasticity are provided in the ring part (70''), the material used in the edge region having a greater modulus of elasticity than that of the material used in the core region.

8. A tensioning and damping element according to any one of the preceding claims, **characterised in that** the chain drive is in the form of a secondary chain drive of a motorcycle exhibiting temporary alteration of the distance between the centres of the sprocket wheels.

## Revendications

1. Elément de tension et d'amortissement (7, 7', 7") constitué par un matériau élastomère pour des dispositif d'entraînement à chaîne, qui comportent une partie annulaire déformable élastiquement (70, 70', 70") et une couronne dentée (71, 71', 71") disposée sur sa périphérie, dans lequel - à l'état sans tension et non monté - la partie annulaire est agencée avec une forme circulaire et - à l'état tendu et monté - prend une forme similaire à une ellipse entre un brin à vide (6) et un brin sous charge (5) du dispositif d'entraînement à chaîne, la couronne dentée engrenant avec le brin à vide et le brin sous charge et transmettant aux deux brins une force de serrage qui provoque la déformation similaire à une ellipse, à une partie annulaire,
**caractérisé en ce que** la partie annulaire possède une section transversale qui, lorsque la flexion augmente, comporte, d'une manière conditionnée par la déformation, une résistance à la flexion qui diminue et que, dans l'état déformé au maximum, conditionné par le fonctionnement, le rapport de la hauteur à la largeur de la section transversale est inférieur d'au moins 4 % à ce qu'il est sans tension.

2. Elément de tension et d'amortissement selon la revendication 1, **caractérisé en ce que** le rapport de la hauteur à la largeur du profil en coupe transversale est réduit d'au moins 10 %.

3. Elément de tension et d'amortissement selon la revendication 1, **caractérisé en ce que** la partie annulaire (70') est agencé sous la forme d'un corps creux.

4. Elément de tension et d'amortissement selon la revendication 3, **caractérisé en ce que** le corps creux est agencé avec une forme circulaire en coupe transversale à l'état sans tension et est aplati dans la zone de la couronne dentée (71').

5. Elément de tension et d'amortissement selon la revendication 1, **caractérisé en ce que** la partie annulaire possède sur son côté intérieur du point de vue radial, au moins deux branches (70a, 70b), qui sont orientées symétriquement par rapport au plan médian longitudinal (7a) et font entre eux un angle (β₁), l'angle augmentant lorsque la déformation de la partie annulaire augmente.

6. Elément de tension et d'amortissement selon la revendication 5, **caractérisé en ce que** lorsque la partie annulaire est dans un état sans tension, l'angle est compris entre 90° et 130°.

7. Elément de tension et d'amortissement selon la revendication 1, **caractérisé en ce qu'**une partie formant noyau (70"a) et une partie marginale (70"b) formées de matériaux ayant des élasticités différentes sont prévues dans la partie annulaire (70"), le matériau utilisé dans la partie marginale possédant un module d'élasticité supérieur à celui du matériau utilisé dans la partie formant noyau.

8. Elément de tension et d'amortissement selon l'une des revendications précédentes, **caractérisé en ce que** le dispositif d'entraînement à chaîne est agencé sous la forme d'un dispositif d'entraînement à chaîne secondaire d'une bicyclette avec modification temporaire de la distance entre les axes des roues à chaîne.
